# EUROPEAN PATENT SPECIFICATION

(11) **EP 2 238 269 B1**
(45) Date of publication and mention of the grant of the patent: **24.09.2014**
(21) Application number: 07860764.5
(22) Date of filing: 28.12.2007
(51) Int. Cl.: C21B 13/00, C21B 13/06, C21B 13/14, F27B 15/18, F27B 15/20, F27D 19/00, F27D 21/00

(54) **METHOD FOR FORECASTING SHARP DROP OF PRESSURE OF MELTER-GASIFIER AND METHOD FOR CONTROLLING THE PRESSURE IN IRONMAKING PROCESS**
VERFAHREN ZUR VORHERSAGE EINES STARKEN DRUCKABFALLS EINES SCHMELZVERGASERS UND VERFAHREN ZUR REGULIERUNG DES DRUCKS BEI EINEM ROHEISENERZEUGUNGSVERFAHREN
PROCÉDÉ DE PRÉVISION D'UNE CHUTE DE PRESSION BRUTALE D'UN FONDEUR/GAZÉIFIEUR ET PROCÉDÉ DE RÉGULATION DE LA PRESSION LORS D'UN PROCESSUS DE FABRICATION DU FER

(43) Date of publication of application: 13.10.2010
(73) Proprietor: Posco, Pohang Kyungsangbook-do 790-300 (KR)
(72) Inventor: CHO, Myung Jong, Pohang Kyungsangbook-do 790-300 (KR); PARK, Hae Doo, Pohang Kyungsangbook-do 790-300 (KR); KIM, Wan Gi, Pohang Kyungsangbook-do 790-300 (KR); LEE, Hoo Geun, Pohang Kyungsangbook-do 790-300 (KR); SHIN, Myoung Kyun, Pohang Kyungsangbook-do 790-300 (KR)
(74) Representative: Zech, Stefan Markus
(86) International application number: PCT/KR2007/006987
(87) International publication number: WO 2009/084751

(56) References cited:
- EP-A1- 0 388 395
- KR-A- 20020 051 992
- KR-A- 20040 056 093
- KR-B1- 100 815 701
- US-A- 4 046 556
- US-A- 4 978 387
- US-A- 5 577 346
- US-B1- 6 214 084

## Description

### Technical Field

The present disclosure relates to a method for forecasting a sharp drop of a pressure of a melter-gasifier and a method for controlling the pressure in an ironmaking process which forecasts the sharp drop of the pressure of the melter-gasifier to control the pressure within the melter-gasifier, and more particularly, to a method for forecasting a sharp drop of a pressure of a melter-gasifier and a method for controlling the pressure in an ironmaking process using non-coking coals and fine iron ores which forecast the sharp drop of the pressure of the melter-gasifier through a sharp drop of a pressure of an excess gas recovery tank, and when the pressure of the recovery tank sharply drops, control a supply amount of a gas (reduction gas) supplied to a reduction furnace and the melter-gasifier to constantly and stably maintain the pressure of the melter-gasifier.

### Background Art

A blast-furnace process typically known for an ironmaking process requires raw material preliminary treatment equipment such as a coke-making equipment. Thus, to construct such an auxiliary equipment, a significant expense is expected.

In addition, to construct environmental pollution prevention facilities for treating environmental pollution materials generated during an operation of the coke-making equipment, the blast-furnace process requires significant expense.

Accordingly, the iron making process using non-coking coals and fine iron ores is previously known. That is, the ironmaking process directly uses the non-coking coals as fuel and reductant, and directly uses the fine iron ores occupying account for more than about 80% of the world's ore production as an iron source material to manufacture molten irons. A FINEX process is well known as the ironmaking process.

Principal equipments of the typical FINEX process include a fluidized-bed reduction furnace including multi-stage fluidized bed furnaces and a reduction furnace, and a melter-gasifier in which a coal packed bed is formed.

Ores successively charged into a top reactor (fluidized-bed reduction furnace) at room temperature are in contact with a high temperature reduction gas supplied from the melter-gasifier while the ores pass through the fluidized bed furnaces and the reduction furnace in order. As a result, the ores are converted into high temperature reduced fine iron ores having a rising temperature and reduction of 90% or more, and at the same time, the reduced fine iron ores are successively charged into the melter-gasifier in which the coal packed bed is formed to melt in the coal packed bed, thereby being converted into molten pig irons. Thereafter, the molten pig irons are discharged from the melter-gasifier.

Also, lump coals are successively supplied into the melter-gasifier through an upper portion of the melter-gasifier to form the coal packed bed having a predetermined height within the melter-gasifier. When oxygen is injected into the coal packed bed through a plurality of tuyeres disposed on a lower end of an outer well of the coal packed bed, coals within the coal packed bed are burned to generate a combustion gas. When the generated combustion gas rises while the gas passes through the coal packed bed, the combustion gas is converted into reduction stream having a high temperature. Thereafter, the combustion gas converted into the reduction stream is circulated and supplied into the fluidized-bed reduction furnace and the reduction furnace.

The high temperature reduction gas supplied from the melter-gasifier to the fluidized bed furnaces and the reduction furnace is generated by combustion and gasification of the non-coking coals. A production amount of the reduction gas is sharply fluctuated according to ingredient and operation conditions of the coals.

For example, the range of fluctuation of the production amount of the high temperature reduction gas reaches from about 20% to about 50% in an extreme case. Also, the extreme fluctuation may occur in a short period of time.

Thus, the fluctuation of the gas flow amount causes a sharp increase or decrease of the amount of the high temperature reduction gas circulated and supplied into the fluidized-bed reduction furnace, the reduction furnace, and the melter-gasifier. The sharp fluctuation of the gas flow amount, i.e., the sharp decrease of the gas flow amount may causes collapse of ore fluidized beds within fluidized-bed reduction furnace and the reduction furnace.

Also, the sharp decrease of the circulating gas amount capable of uniformly maintaining an internal pressure of the melter-gasifier or the sharp drop of the pressure causes serious operational limitations such as an unstable operation of the melter-gasifier.

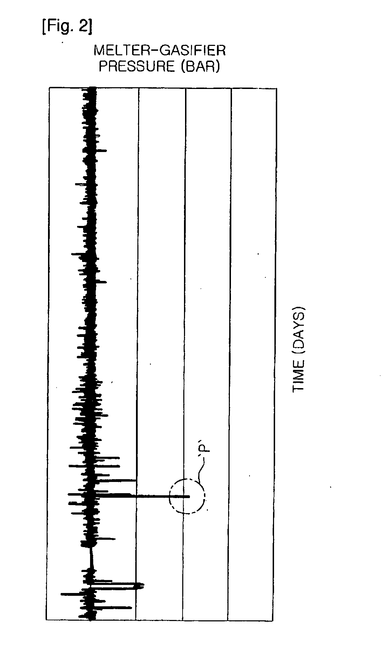

It is difficult to forecast the sharp drop of the pressure of the melter-gasifier. For example, although the internal pressure of the melter-gasifier is expressed as a numerical value as illustrated in FIG. 2, it is difficult to forecast when the internal pressure of the melter-gasifier sharply drops. Also, such a method for forecasting the pressure of the melter-gasifier has not been proposed yet.

Furthermore, a method for forecasting the sharp drop of the pressure of the melter-gasifier and a method for stably controlling the internal pressure of the melter-gasifier has not been proposed yet.

Document EP 0388395 A1 discloses a process for producing combustible gases in a melt-down gasifier. The combustible gas produced is divided into two partial flows, where a first partial flow of the combustible gas produced is used for the pre-reduction of an ore to be fed to the melt-down gasifier.

Document US 4 046 0556 A discloses a direct gaseous reduction of oxidic metal ores with dual temperature cooling of the reduced product.

Document US 5 557 346 A describes a multi-zone molten-metal hydrogen and fuel gas generation process. A molten-metal gasifier plant comprises three molten-metal-zones.

### Disclosure of Invention

### Technical Problem

An aspect of the present invention provides a method for forecasting a sharp drop of a pressure of a melter-gasifier in an ironmaking process which makes a molten iron with a fluidized bed furnace, a reduction furnace, and a melter-gasifier, the method comprising: measuring an internal pressure of a gas storage tank recovering and storing excess gas generated in the melter-gasifier in real time; and determining the sharp drop of the internal pressure of the melter-gasifier when the internal pressure of a gas storage tank sharply drops or is below a set pressure; wherein the gas storage tank is disposed in an excess gas recovery line which is branched from a melter-gasifier-side excess gas line and associated with a gas discharge line of the melter-gasifier.

According to further another aspect of the present invention, there is provided a method for controlling a pressure of a melter-gasifier in an ironmaking process which makes a molten iron with a fluidized bed furnace, a reduction furnace, and a melter-gasifier, the method comprising: measuring the internal pressure of a gas storage tank recovering and storing excess generated in the melter-gasifier in real time; determining the sharp drop of the internal pressure of the melter-gasifier when the internal pressure of the gas storage pressure sharply drops or is below a set pressure; and adjusting an amount of a reduction gas supplied to at least one of the melter-gasifier and a reduction furnace to control the internal pressure of the melter-gasifier; wherein the gas storage tank is disposed in an excess gas recovery line which is branched from a melter-gasifier-side excess gas line and associated with a gas discharge line of the melter-gasifier.

### Advantageous Effects

According to a method for forecasting a sharp drop of a pressure of a melter-gasifier in an ironmaking process, it is possible to recognize the sharp drop of the pressure of a gas storage tank for recovering an excess gas discharged from the melter-gasifier to forecast the sharp drop of the pressure of the melter-gasifier.

According to a method for controlling a pressure of the melter-gasifier, a supply amount of a gas (reduction gas) influencing on the pressure of the melter-gasifier can be adjusted before the pressure of the melter-gasifier sharply drops to stably realize a pressure operation of the melter-gasifier.

Therefore, according to the present invention, an operation of the melter-gasifier in an ironmaking process using non-coking coals and fine iron ores can be stably maintained to improve operation productivity.

### Brief Description of Drawings

FIG. 1 is a flowchart of an excess gas circulation system in an ironmaking process using non-coking coals and fine iron ores according to the present invention.
FIG. 2 is a graph illustrating a pressure within a melter-gasifier as a process operation time.
FIG. 3 is a graph illustrating a relationship between a sharp drop of a pressure of a melter-gasifier and a sharp drop of a pressure of a buffer tank.

### Mode for the Invention

Reference will now be made in detail to the embodiments of the present disclosure, examples of which are illustrated in the accompanying drawings.

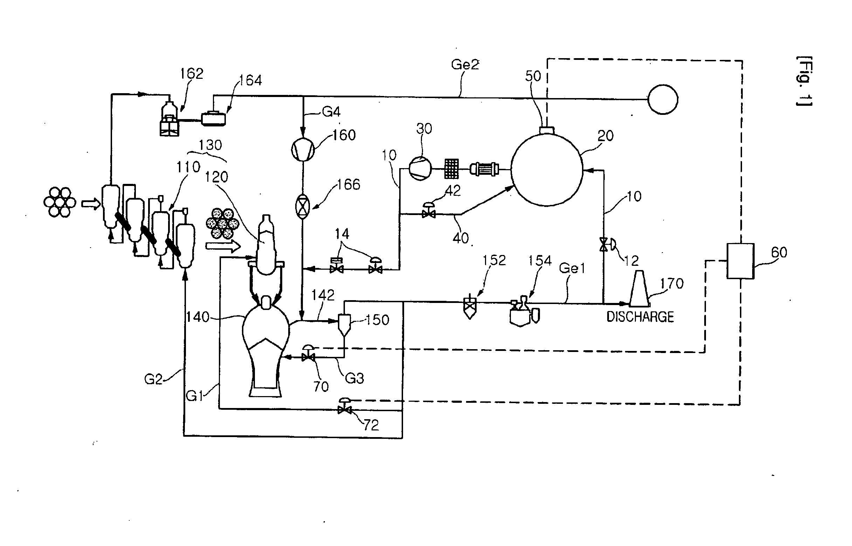

In figures 1 to 3 below, reference numerals of components with respect to an ironmaking process are illustrated in the 100 series, and reference numerals of components with respect to an excess gas recovery system according to the present invention are illustrated in the 10 series. First characters of gas circulation lines and excess gas lines that are main lines in a gas circulation system are illustrated with a character "G" and numerals are used for their distinction.

FIG. 1 is a flowchart of an excess gas circulation system in a FINEX process, which is a typical process for making a molten iron by directly using non-coking coals and fine iron ores.

Before a method for forecasting a sharp drop of a pressure of a melter-gasifier and a method for controlling the pressure are described, an excess gas recovery system associated with a forecast of a sharp pressure drop in the melter-gasifier will be described.

Referring to FIG. 1, an excess gas recovery system in an ironmaking process includes a fluidized-bed reduction furnace 130 including multi-stage fluidized bed furnaces 110 and a reduction furnace 120, and a melter-gasifier 140 in which a coal packed bed is formed. Ores successively charged into a top reactor at room temperature are in contact with a high temperature reduction gas supplied from the melter-gasifier 140 while the ores pass through the fluidized bed furnaces 110 and the reduction furnace 120 in order. As a result, the ores are converted into high temperature reduced fine iron ores having a rising temperature and reduction of 90% or more, and at the same time, the reduced fine iron ores are successively charged into the melter-gasifier 140 in which the coal packed bed is formed to melt in the coal packed bed to melt in the coal packed bed therein, thereby obtaining molten iron.

Also, lump coals are successively supplied into the melter-gasifier 140 through an upper portion of the melter-gasifier to form the coal packed bed having a pre-determined height within the melter-gasifier. When oxygen is injected into the coal packed bed through a plurality of tuyeres disposed on a lower end of an outer well of the coal packed bed, coals within the coal packed bed are burned to generate a combustion gas. When the generated combustion gas rises while the gas passes through the coal packed bed, the combustion gas is converted into reduction stream having a high temperature. Thereafter, the combustion gas converted into the reduction stream is discharged from the melter-gasifier 140 such that the combustion gas is supplied to the fluidized bed furnaces 110 and the reduction furnace 120.

That is, a reduction gas discharged from a gas discharge line 142 of the melter-gasifier 140 pass through a cyclone 150 and is respectively supplied to the melter-gasifier, the reduction furnace, and fluidized bed furnaces through melter-gasifier-side, reduction furnace-side and fluidized bed furnace-side gas circulation lines (or referred to as "gas conduits") G3, G1, and G2 (hereinafter, referred to as "a circulation line G3, a circulation line G1, and a circulation line G2", respectively).

The high temperature reduction gas amount (gas supply amount) supplied to the flu idized bed furnaces (G2 line), the reduction furnace (G1 line), and the melter-gasifier (G3 line) is extremely fluctuated in a short period of time as described above.

A sharp decrease or increase of the reduction gas amount cause a temporary collapse of ore fluidized beds within the fluidized bed furnaces 110 and the reduction furnace 120 or makes it difficult to uniformly maintain an internal pressure of the melter-gasifier 140. Thus, security of the stable fluidized beds according to recovery of the reduction gas and maintenance of a stable operation of the melter-gasifier 140 are required.

In this case, a portion of the excess gas discharged from the melter-gasifier 140 is discharged into a melter-gasifier-side excess gas line Ge1 (hereinafter, referred to as "an excess gas line Ge1") through a pressure control valve 154 to control a sharp fluctuation of the reduction gas circulating in the fluidized bed furnaces 110 and the reduction furnace 120.

That is, an excess amount increased according to the fluctuation of the pressure and flow amount is discharged into the excess gas line Ge1, and the reduction gas is supplied to the fluidized bed furnaces 110 and the reduction furnace 120 at a uniform pressure and flow amount. In this case, the reduction gas for reducing iron ores may not be stably supplied during an actual operation.

Accordingly, as illustrated in FIG. 1, a portion of the excess gas discharged from the fluidized bed furnaces 110 passes through a gas circulation line G4 branched from a fluidized bed furnace-side excess gas line Ge2 (hereinafter, referred to as "an excess gas line Ge2") to move into a compressor 160. The portion of the excess gas moving into the compressor 160 is compressed and moves into a CO remover 166. A CO gas unnecessary for the reduction is removed through the CO remover 166, and the 2 remaining gas is circulated and supplied into the gas discharge line 142 of the melter-gasifier 140.

However, since insufficiency of the reduction gas circulating in the fluidized bed furnaces 110 and the reduction furnace 120 still remains, a method that the excess gas of the excess gas line Ge1 is not complete discharged and is recovered and stored, if needed, to use the stored excess gas is added.

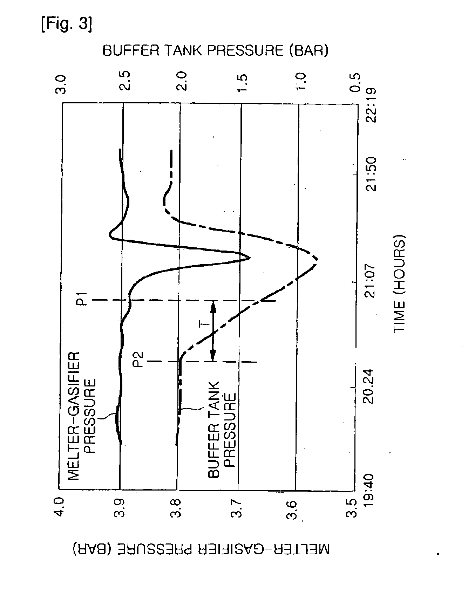

Unexplained reference numerals 152 and 162 in FIG 1 (it can be also applied to FIGS. 2 and 3) denote cooling equipments for reducing a temperature of the excess gas in the excess gas lines Ge1 and Ge2, respectively. Also, unexplained reference numeral 153 denotes a pressure control valve, and unexplained reference numeral 164 denotes a flow amount control valve.

Referring to FIG. 1, there is provided an excess gas recovery line 10 associated with the excess gas line Ge1. The excess gas recovery line 10 circulates and supplies the excess gas into the gas discharge line 142 of the melter-gasifier 140. A gas storage tank, i.e., a buffer tank 20 receiving and storing the excess gas is disposed in the excess gas recovery line 10 to the lack of the reduction gas as described above.

Preferably, a compressor 30 is disposed in the excess gas recovery line 10 of a downstream side of the buffer tank 20. The compressor 30 converts a low-pressure excess gas into a high-pressure excess gas to supply the high-pressure excess gas from the buffer tank to the melter-gasifier 140.

Since the buffer tank 20 receives and stores the low-pressure excess gas through the. excess gas line Ge1, the low-pressure small-capacity buffer tank may be used.

In the excess gas recovery line 10, a high-pressure gas reverse supply line 40 is disposed between a downstream side of the compressor 30 and the buffer tank 20. The high-pressure gas reverse supply line 40 reversely supplies a high-pressure gas to the buffer tank 20 in order to minutely control the gas discharge amount of the buffer tank 20. A control valve 41 is disposed in the high-pressure gas reverse supply line 40.

As described above, the excess gas recovery line 10 is connected to the gas circulation line G4 branched from the excess gas line Ge2 and connected to the gas discharge line 142 of the melter-gasifier 140. The recovered excess gas is stored in the buffer tank 20 and compressed in the compressor 160. The compressed high-pressure excess gas passes through the gas discharge line 142 and the cyclone 150 and is circulated and supplied into the melter-gasifier (G3 line), the fluidized bed furnaces (G2 line), and the reduction furnace (G1 line).

Therefore, the collapse of the fluidized beds in the fluidized bed furnaces 110 and the reduction furnace 120 is prevented, and the pressure within the melter-gasifier 140 is uniformly maintained.

As illustrated in FIG. 1, at least one control valve 14 for controlling the circulation of the high-pressure gas is disposed in a downstream side of the excess gas recovery line 10. A control valve 12 is disposed in an upstream side of the excess gas recovery line 10.

Hereinafter, on the basis of the excess gas circulation system of the ironmaking process described above, the method for forecasting the sharp drop of the pressure of the melter-gasifier 140 in the ironmaking process using the non-coking coals and fine iron ores according to the present invention will be described.

As illustrated in FIG. 1, in the method for forecasting the sharp drop of the pressure of the melter-gasifier 140, when an internal pressure of the buffer tank 20 disposed in the excess gas recovery line 10 branched from the excess gas line Ge1 recovering the excess gas generated in the melter-gasifier 140 sharply drops, e.g., the internal pressure of the buffer tank 20 is below a set pressure, it is forecasted that an internal pressure of the melter-gasifier 140 will sharply drop.

The sharp drop of the internal pressure of the melter-gasifier 140 is associated with the internal pressure of the buffer tank 20 because of the following reasons.

For example, FIG. 2 is a graph illustrating a sharp pressure drop of the melter-gasifier 140, and FIG. 3 is a graph illustrating a relationship between the sharp pressure drop of the melter-gasifier and a sharp pressure drop of the buffer tank 20.

The graphs of FIGS. 2 and 3 are based on data obtained in the ironmaking process, which is constructed, commercialized, and operated by an applicant of this application, for example, data obtained during an actual operation of the FINEX process.

As illustrated in FIG. 2, the internal pressure of the melter-gasifier has an effect on a fluctuation of gas flow amount. Although the gas flow amount or a pressure is uniformly maintained as illustrated in FIG. 2 through the excess gas circulation system of FIG. 1, the sharp pressure drop (point 'P of FIG. 2) may occur.

When the internal pressure of the buffer tank 20 is associated with the point 'P that is a minimum pressure value in the graph of FIG. 2, i.e., a point at which the internal pressure sharply drops, the graph of FIG. 3 can be obtained.

For example, as illustrated in FIG. 2, the sharp drop of the internal pressure of the melter-gasifier starts at a point 'P1' and the sharp drop of the internal pressure of the buffer tank 20 starts at a point 'P2' before a predetermined period of time 'T' (for example, about a half hour based on the graph of FIG. 3).

At the point 'P1' the internal pressure of the melter-gasifier is normal, and the internal pressure of the buffer tank sharply drops from about 2.0 bar to about 1.3 bar.

It can know that a minimum value of the internal pressure of the melter-gasifier and a minimum value of the internal pressure of the buffer tank occur at almost the same time.

Thus, as illustrated in FIG.3, in case where a gas receiving pressure of the buffer tank 20 is 2.0 bar, when the gas receiving pressure of the buffer tank 20 drops from about 1.1 bar to about 1.3 bar, it is recognized that the internal pressure of the buffer tank 20 sharply drops. Therefore, it can be forecasted that the internal pressure of the melter-gasifier will sharply drop.

Although it is now difficult to forecast whenever the internal pressure of the melter-gasifier sharply drops, the present invention can easily implement using existing equipments. As a result, unstable operation due to the sharp pressure drop within the melter-gasifier can be prevented.

Referring to FIG. 1, when a pressure measurement unit of the buffer tank 20, i.e., a pressure sensor is disposed at a point, and the pressure sensor is associated with an equipment controller 60, the internal pressure of the buffer tank 20 can be detected in real time.

For example, when a display (not shown) such as a monitor is connected to the controller 60, an operator can monitor the internal pressure of the buffer tank 20 in real time.

The set pressure of the buffer tank 20 is a reference pressure. When the set pressure of the buffer tank 20 drops below a reference pressure, it can be forecasted that the internal pressure of the melter-gasifier will sharply drop. According to FIG. 3, the reference pressure may be about 65% of the gas receiving pressure of the buffer tank 20.

For example, as illustrated in FIGS. 1 and 3, in case where the gas receiving pressure of the buffer tank 20 is 2 bar, when the internal pressure of the buffer tank is below about 1.3 bar (or 1.1 bar) at the point P1 at which the sharp drop of the internal pressure of the melter-gasifier starts, it is set as the set pressure. Thus, when the internal pressure of the buffer tank is below the set pressure, it is forecasted that the internal pressure of the melter-gasifier will sharply drop. Of cause, as described above, it is based on the data obtained during the actual operation.

In case where the set pressure of the buffer tank 20 that is the gas storage tank is above about 65% of the gas receiving pressure of the buffer tank, it is wrongly forecasted that the internal pressure of the melter-gasifier will sharply drop even though as it is the normal operation is being progressed. Thus, it is preferable that the set pressure is set based on the data in the graph of FIG. 3.

When it is forecasted that the internal pressure of the melter-gasifier will sharply drop, the internal pressure of the melter-gasifier can be controlled.

For example, as illustrated in FIG. 1, when the internal pressure of the buffer tank 20 storing the recovered excess gas is below the set pressure, it is forecasted that the internal pressure of the melter-gasifier will sharply drop. As a result, the amount of the reduction gas supplied to at least one of melter-gasifier 140 and the reduction furnace 120 or both melter-gasifier 140 and the reduction furnace 120 is previously adjusted to control the internal pressure of the melter-gasifier 140.

As illustrated in FIG. 1, the controller 60 connected to the pressure sensor that is an internal pressure measurement unit 50 of the buffer tank 20 is associated with control valves 70 and 72 disposed in the gas circulation lines G3 and G1, which are associated with the gas discharge line 142 of the melter-gasifier 140 to supply the reduction gas to the melter-gasifier 140 and the reduction furnace 120.

The internal pressure of the buffer tank 20 is detected in real time using the pressure measurement unit 50 that is the pressure sensor, and the detected pressure value is transferred to the controller 60. When the internal pressure of the buffer tank abnormally drops as the point 'P' of FIG. 2, the pressure can be displayed in a line graph through the controller 60. The operator can determine that the internal pressure of the melter-gasifier will sharply drop.

The controller 60 associated with the pressure measurement unit 50 of the butter tank compares the set pressure described above with the internal pressure of the butter tank measured in real time. As a result, when the controller 60 determines that the internal pressure of the butter tank is below the set pressure due to the abnormally sharp pressure drop of the butter tank, the controller 60 determines that the internal pressure of the melter-gasifier will sharply drop.

The controller 60 can control an operation of the control valve 70 disposed/ associated in/with the gas circulation line G1 to adjust the amount of the reduction gas supplied to at least reduction furnace 120 of the melter-gasifier 140 and the reduction furnace 120, thereby preventing the sharp drop of the internal pressure of the melter-gasifier 140.

For example, if the amount of the reduction gas is about 45,000 Nm³/h in case where the amount of the reduction gas supplied to the reduction furnace 120 is normal, the controller 60 reduces the supply amount of the reduction gas by about 29,000 Nm³/h to prevent the sharp drop of the internal pressure of the melter-gasifier 140.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

### Industrial Applicability

In the method for forecasting the sharp drop of the pressure of the melter-gasifier and the method for controlling the pressure of the melter-gasifier in the ironmaking process using the non-coking coals and fine iron ores, the sharp drop of the internal pressure of the melter-gasifier can be easily forecasted using existing ironmaking equipments to stably maintain the internal pressure of the melter-gasifier.

Therefore, the melter-gasifier can be stably operated to improve productivity of the ironmaking process which makes the molten iron using the non-coking coals and fine iron ores.

## Claims

1. A method for forecasting a sharp drop of a pressure of a melter-gasifier (140) in an ironmaking process which makes a molten iron with a fluidized bed furnace (110), a reduction furnace (120), and a melter-gasifier (140), the method comprising:
measuring an internal pressure of a gas storage tank (20) recovering and storing excess gas generated in the melter-gasifier (140) in real time; and
detecting the sharp drop of the internal pressure of the melter-gasifier (140) when the internal pressure of a gas storage tank (20) sharply drops or is below a set pressure;
wherein the gas storage tank (20) is disposed in an excess gas recovery line (10) which is branched from a melter-gasifier-side excess gas line (G3) and associated with a gas discharge line (142) of the melter-gasifier (140).

2. The method of claim 1, wherein the gas storage tank (20) comprises a pressure measurement unit that is associated with a controller (60) to measure the internal pressure of the gas storage tank (20) in real time.

3. The method of claim 1, wherein the set pressure of the gas storage tank (20) is about 65 % of a gas receiving pressure of the gas storage tank (20).

4. The method of claim 1, wherein the excess gas recovery line (10) is associated with a gas circulation line (G4) which is connected to the gas discharge line (142) of the melter-gasifier (140) and branched from a fluidized bed furnace-side excess gas line (G2), and the excess gas is stored in the gas storage tank (20) without changing a pressure.

5. A method for controlling a pressure of a melter-gasifier in an ironmaking process which makes a molten iron with a fluidized bed furnace (110), a reduction furnace (120), and a melter-gasifier (140), the method comprising:
measuring the internal pressure of a gas storage tank (20) recovering and storing excess gas generated in the melter-gasifier (140) in real time;
detecting the sharp drop of the internal pressure of the melter-gasifier (140) when the internal pressure of the gas storage tank (20) sharply drops or is below a set pressure; and
adjusting an amount of a reduction gas supplied to at least one of the melter-gasifier (140) and a reduction furnace (120) to control the internal pressure of the melter-gasifier (140);
wherein the gas storage tank (20) is disposed in an excess gas recovery line (10) which is branched from a melter-gasifier-side excess gas line (G3) and associated with a gas discharge line (142) of the melter-gasifier (140).

6. The method of claim 5, wherein the gas storage tank (20) comprises a pressure measurement unit associated with a controller (60) to measure the internal pressure of the gas storage tank (20) in real time and detect the sharp drop of the internal pressure of the gas storage tank (20).

7. The method of claim 5, wherein the gas storage tank (20) comprises a pressure measurement unit associated with a controller (60) to measure whether the internal pressure of the gas storage tank (20) is below the set pressure, and the set pressure is about 65 % of a gas receiving pressure of the gas storage tank (20).

8. The method of claim 6, wherein the controller (60) associated with the pressure measurement unit is associated with control valves (70, 72) respectively disposed in a melter-gasifier-side gas circulation line and a fluidized bed furnace-side gas circulation line associated with a gas discharge line (142) of the melter-gasifier (140) to control a supply amount of the reduction gas.

9. The method of claim 7, wherein the controller (60) associated with the pressure measurement unit is associated with control valves (70, 72) respectively disposed in a melter-gasifier-side gas circulation line and a fluidized bed furnace-side gas circulation line associated with a gas discharge line (142) of the melter-gasifier (140) to control a supply amount of the reduction gas.

## Patentansprüche

1. Verfahren zur Vorhersage eines starken Abfalls eines Drucks eines Schmelzvergasers (140) in einem Eisenherstellungsprozess, der ein Schmelzeisen mit einem Wirbelschichtofen (110), einem Reduktionsofen (120) und einem Schmelzvergaser (140) herstellt, wobei das Verfahren umfasst:
Messen eines Innendrucks eines Gasspeicherbehälters (20) in Echtzeit, der überschüssiges Gas, das im Schmelzvergaser (140) erzeugt wird, rückgewinnt und speichert; und
Erfassen des starken Abfalls des Innendrucks des Schmelzvergasers (140), wenn der Innendruck eines Gasspeicherbehälters (20) stark abfällt oder unter einem Solldruck liegt;
wobei der Gasspeicherbehälter (20) in einer Überschussgasrückgewinnungsleitung (10) angeordnet ist, die von einer schmelzvergaserseitigen Überschussgasleitung (G3) abgezweigt und mit einer Gasausströmleitung (142) des Schmelzvergasers (140) verbunden ist.

2. Verfahren nach Anspruch 1, wobei der Gasspeicherbehälter (20) eine Druckmesseinheit umfasst, die mit einem Regler (60) verbunden ist, um den Innendruck des Gasspeicherbehälters (20) in Echtzeit zu messen.

3. Verfahren nach Anspruch 1, wobei der Solldruck des Gasspeicherbehälters (20) ca. 65% eines Gasaufnahmedrucks des Gasspeicherbehälters (20) beträgt.

4. Verfahren nach Anspruch 1, wobei die Überschussgasleitung (10) mit einer Gaszirkulationsleitung (G4) verbunden ist, die an die Gasausströmleitung (142) des Schmelzvergasers (140) angeschlossen und von einer wirbelstromofenseitigen Überschussgasleitung (G2) abgezweigt ist, und das überschüssige Gas im Gasspeicherbehälter (20), ohne einen Druck zu verändern, gespeichert wird.

5. Verfahren zum Regeln eines Drucks eines Schmelzvergasers in einem Eisenherstellungsprozess, der ein Schmelzeisen mit einem Wirbelschichtofen (110), einem Reduktionsofen (120) und einem Schmelzvergaser (140) herstellt, wobei das Verfahren umfasst:
Messen des Innendrucks eines Gasspeicherbehälters (20) in Echtzeit, der überschüssiges Gas, das im Schmelzvergaser (140) erzeugt wird, rückgewinnt und speichert;
Erfassen des starken Abfalls des Innendrucks des Schmelzvergasers (140), wenn der Innendruck des Gasspeicherbehälters (20) stark abfällt oder unter einem Solldruck liegt; und
Einstellen einer Menge an Reduktionsgas, das dem Schmelzvergaser (140) und/oder dem Reduktionsofen (120) zugeführt wird, um den Innendruck des Schmelzvergasers (140) zu regeln;
wobei der Gasspeicherbehälter (20) in einer Überschussgasrückgewinnungsleitung (10) angeordnet ist, die von einer schmelzvergaserseitigen Überschussgasleitung (G3) abgezweigt und mit einer Gasausströmleitung (142) des Schmelzvergasers (140) verbunden ist.

6. Verfahren nach Anspruch 5, wobei der Gasspeicherbehälter (20) eine Druckmesseinheit umfasst, die mit einem Regler (60) verbunden ist, um den Innendruck des Gasspeicherbehälters (20) in Echtzeit zu messen und den starken Abfall des Innendrucks des Gasspeicherbehälters (20) zu erfassen.

7. Verfahren nach Anspruch 5, wobei der Gasspeicherbehälter (20) eine Druckmesseinheit umfasst, die mit einem Regler (60) verbunden ist, um zu messen, ob der Innendruck des Gasspeicherbehälters (20) unter dem Solldruck liegt, und ob der Solldruck ca. 65% eines Gasaufnahmedrucks des Gasspeicherbehälters (20) beträgt.

8. Verfahren nach Anspruch 6, wobei der mit der Druckmesseinheit verbundene Regler (60) mit Regelventilen (70, 72) verbunden ist, die in einer schmelzvergaserseitigen Gaszirkulationsleitung bzw. einer mit einer Gasausströmleitung (142) des Schmelzvergasers (140) verbundenen wirbelschichtofenseitigen Gaszirkulationsleitung angeordnet sind, um eine Zufuhrmenge des Reduktionsgases zu regeln.

9. Verfahren nach Anspruch 7, wobei der mit der Druckmesseinheit verbundene Regler (60) mit Regelventilen (70, 72) verbunden ist, die in einer schmelzvergaserseitigen Gaszirkulationsleitung bzw. einer mit einer Gasausströmleitung (142) des Schmelzvergasers (140) verbundenen wirbelschichtofenseitigen Gaszirkulationsleitung angeordnet sind, um eine Zufuhrmenge des Reduktionsgases zu regeln.

## Revendications

1. Procédé de prévision d'une chute brutale d'une pression d'un fondeur/gazéifieur (140) dans un processus de fabrication de fonte qui fabrique une fonte liquide au moyen d'un four à lit fluidisé (110), d'un four de réduction (120), et d'un fondeur/gazéifieur (140), le procédé comprenant :
la mesure en temps réel d'une pression interne d'un réservoir de stockage de gaz (20) récupérant et stockant du gaz excédentaire généré dans le fondeur/gazéifieur (140) ; et
la détection de la chute brutale de la pression interne du fondeur/gazéifieur (140) lorsque la pression interne d'un réservoir de stockage de gaz (20) chute brutalement ou est inférieure à une pression réglée ;
dans lequel le réservoir de stockage de gaz (20) est disposé dans une conduite de récupération de gaz excédentaire (10) qui est dérivée d'une conduite de gaz excédentaire (G3) côté fondeur/gazéifieur et associée à une conduite d'évacuation de gaz (142) du fondeur/gazéifieur (140).

2. Le procédé de la revendication 1, dans lequel le réservoir de stockage de gaz (20) comprend une unité de mesure de pression qui est associée à un dispositif de régulation (60) pour mesurer la pression interne du réservoir de stockage de gaz (20) en temps réel.

3. Le procédé de la revendication 1, dans lequel la pression réglée du réservoir de stockage de gaz (20) est d'environ 65 % d'une pression de réception de gaz du réservoir de stockage de gaz (20).

4. Le procédé de la revendication 1, dans lequel la conduite de récupération de gaz excédentaire (10) est associée à une conduite de circulation de gaz (G4) qui est raccordée à la conduite d'évacuation de gaz (142) du fondeur/gazéifieur (140) et dérivée d'une conduite de gaz excédentaire (G2) côté four à lit fluidisé, et le gaz excédentaire est stocké dans le réservoir de stockage de gaz (20) sans changement de pression.

5. Procédé de régulation d'une pression d'un fondeur/gazéifieur dans un processus de fabrication de fonte qui fabrique une fonte liquide au moyen d'un four à lit fluidisé (110), d'un four de réduction (120), et d'un fondeur/gazéifieur (140), le procédé comprenant :
la mesure en temps réel de la pression interne d'un réservoir de stockage de gaz (20) récupérant et stockant du gaz excédentaire généré dans le fondeur/gazéifieur (140) ;
la détection de la chute brutale de la pression interne du fondeur/gazéifieur (140) lorsque la pression interne du réservoir de stockage de gaz (20) chute brutalement ou est inférieure à une pression réglée ; et
le réglage d'une quantité d'un gaz de réduction fourni à au moins un du fondeur/gazéifieur (140) et du four de réduction (120) pour réguler la pression interne du fondeur/gazéifieur (140) ;
dans lequel le réservoir de stockage de gaz (20) est disposé dans une conduite de récupération de gaz excédentaire (10) qui est dérivée d'une conduite de gaz excédentaire (G3) côté fondeur/gazéifieur et associée à une conduite d'évacuation de gaz (142) du fondeur/gazéifieur (140).

6. Le procédé de la revendication 5, dans lequel le réservoir de stockage de gaz (20) comprend une unité de mesure de pression associée à un dispositif de régulation (60) pour mesurer la pression interne du réservoir de stockage de gaz (20) en temps réel et détecter la chute brutale de la pression interne du réservoir de stockage de gaz (20).

7. Le procédé de la revendication 5, dans lequel le réservoir de stockage de gaz (20) comprend une unité de mesure de pression associée à un dispositif de régulation (60) pour mesurer si la pression interne du réservoir de stockage de gaz (20) est inférieure à la pression réglée, et la pression réglée est d'environ 65 % d'une pression de réception de gaz du réservoir de stockage de gaz (20).

8. Le procédé de la revendication 6, dans lequel le dispositif de régulation (60) associé à l'unité de mesure de pression est associé à des vannes de régulation (70, 72) respectivement disposées dans une conduite de circulation de gaz côté fondeur/gazéifieur et une conduite de circulation de gaz côté four à lit fluidisé associée à une conduite d'évacuation de gaz (142) du fondeur/gazéifieur (140) pour réguler une quantité de fourniture du gaz de réduction.

9. Le procédé de la revendication 7, dans lequel le dispositif de régulation (60) associé à l'unité de mesure de pression est associé à des vannes de régulation (70, 72) respectivement disposées dans une conduite de circulation de gaz côté fondeur/gazéifieur et une conduite de circulation de gaz côté four à lit fluidisé associée à une conduite d'évacuation de gaz (142) du fondeur/gazéifieur (140) pour réguler une quantité de fourniture du gaz de réduction.
